# EUROPÄISCHE PATENTANMELDUNG

(11) **EP 2 486 997 A1**
(43) Veröffentlichungstag der Anmeldung: **15.08.2012**
(21) Anmeldenummer: 11192944.4
(22) Anmeldetag: 12.12.2011
(51) Int. Cl.: B23B 31/12

(54) **Bohrfutter**

(30) Priorität: 10.02.2011 DE 102011000611
(71) Anmelder: Röhm GmbH, 89567 Sontheim/Brenz (DE)
(72) Erfinder: Mack, Hans-Dieter, 89567 Sontheim (DE)
(74) Vertreter: Hentrich, Swen

(57) **Zusammenfassung**

Bohrfutter (1) mit einem einen Anschluss (2) für eine Werkzeugmaschine aufweisenden Futterkörper (3) und mit einem zum Futterkörper (3) verdrehbaren Spannkonus (4), der axial auf einem am Futterkörper (3) gelagerten Backenhalter (5) abgestützt ist, in dem gleichmäßig über den Umfang verteilt eine Mehrzahl von zwischen sich eine Werkzeugaufnahme (6) bildenden Spannbacken (7) angeordnet sind, die mit ihrem Backenkörper (8) auf der den Backenflächen (9) gegenüberliegenden Seite auf einer zur Futterachse (10) geneigten Führungsachse (11) in Führungsschlitzen (12) und radial verstellbar an einem Mitnehmer (13) geführt sind und zum Spannen und Lösen durch eine Relativdrehung zwischen dem Futterkörper (3) und dem Spannkonus (4) mit dem Backenhalter (5) verstellbar sind, wozu der Mitnehmer (13) mit einem Mitnehmergewinde (14) in ein koaxial zur Futterachse (10) ausgebildetes Spindelgewinde (15) einer Mitnehmeraufnahme (16) des Futterkörpers (3) eingreift, wobei der Schnittpunkt der Führungsachsen (11) gegenüber einem Standardbohrfutter in Richtung der Werkzeugaufnahme (6) versetzt ist.

## Beschreibung

Die Erfindung betrifft ein Bohrfutter mit einem einen Anschluss für eine Werkzeugmaschine aufweisenden Futterkörper und mit einem zum Futterkörper verdrehbaren Spannkonus, der axial auf einem am Futterkörper gelagerten Backenhalter abgestützt ist, in dem gleichmäßig über den Umfang verteilt eine Mehrzahl von zwischen sich eine Werkzeugaufnahme bildenden Spannbacken angeordnet sind, die mit ihrem Backenkörper auf der den Backenflächen gegenüberliegenden Seite auf einer zur Futterachse geneigten Führungsachse in Führungsschlitzen und radial verstellbar an einem Mitnehmer geführt sind und zum Spannen und Lösen durch eine Relativdrehung zwischen dem Futterkörper und dem Spannkonus mit dem Backenhalter verstellbar sind, wozu der Mitnehmer mit einem Mitnehmergewinde in ein koaxial zur Futterachse ausgebildetes Spindelgewinde einer Mitnehmeraufnahme des Futterkörpers eingreift.

Ein derartiges Bohrfutter ist beispielsweise aus der DE 10 2005 058 657 A1 bekannt, wobei dieses Flachbackenbohrfutter speziell ausgebildete Spannbacken aufweist, welche ein sicheres Spannen von Werkzeugen über die gesamte Lebensdauer des Bohrfutters gewährleisten.

Elektrisch betätigte Handbohrmaschinen oder Schrauber mit oder ohne Kabel, welche ein oben genanntes bekanntes Bohrfutter verwenden, sind als ein gedrehtes großes L gebildet, wobei der Nutzer die Maschine an einem der beiden Schenkel hält. Durch das am Ende des freien Schenkels angeordnete Bohrfutter wirkt ständig ein Drehmoment an der Maschine, das der Nutzer auszugleichen hat. Dieses Drehmoment kann durch axiale Verkürzung und Gewichtsreduzierung des Bohrfutters verringert werden, was eine starke Verbesserung für eine derartige kopflastige Maschine darstellt.

Neben der Verringerung des an der Maschine wirkenden Drehmoments während dessen Benutzung bietet eine verkürzte Bildung der Bohrfutters außerdem einen finanziellen Vorteil bei seiner Herstellung. Ist das Bohrfutter kürzer und leichter gebildet, so fallen ein geringerer Materialeinsatz und dementsprechend geringere Materialkosten an.

Standardmäßig wird seit vielen Jahren eine Neigung der Führungsachsen bezüglich der Futterachse von 20 Grad bevorzugt. Dementsprechend wird auch bei dem bekannten Bohrfutter von derartigen Standards nicht abgewichen, wodurch das Bohrfutter nicht als ein kurzes Bohrfutter gebildet ist.

Es ist daher die Aufgabe der vorliegenden Erfindung ein Bohrfutter bereit zu stellen, das eine kompakte Bauweise mit verkürzter axialer Erstreckung entlang der Futterachse unter Reduzierung seines Eigengewichts aufweist. Diese Aufgabe wird mit einem Bohrfutter der eingangs genannten Art gemäß der Erfindung dadurch gelöst, dass der Schnittpunkt der Führungsachsen gegenüber einem Standardbohrfutter in Richtung der Werkzeugaufnahme versetzt ist.

Damit ist der Vorteil verbunden, dass das Bohrfutter eine kompakte Bauweise besitzt und damit in seiner Länge und seinem Gewicht reduziert ist, wodurch der Nutzer ein geringeres, durch das Bohrfutter an der Bohrmaschine wirkendes, Drehmoment ausgleichen muss.

Eine weitere vorteilhafte Ausführungsform ist dadurch gegeben, dass die Neigung der Führungsachsen bezüglich der Futterachse zwischen 20 und 50 Grad beträgt. Bei einer Neigung über 50 Grad wäre die Spannkraft drastisch reduziert, wodurch kein sicheres Spannen von Bohrwerkzeugen mehr gewährleistet ist.

Deshalb ist weiterhin vorteilhaft, wenn die Neigung der Führungsachsen bezüglich der Futterachse zwischen 25 und 35 Grad beträgt. Durch diesen Bereich ist ein optimales Verhältnis zwischen Spannkraft und Länge des Bohrfutters geschaffen.

Eine vorteilhafte Ausführungsform ist dadurch gegeben, dass das Mitnehmergewinde und das Spindelgewinde gegenüber einem Standardbohrfutter mit verringerter Gewindesteigung gebildet sind. Einem Spannkraftverlust durch die verkürzte Bildung des Bohrfutters ist damit vorgebeugt. Verringert sich der Steigungswinkel der Gewinde und bleibt die Kraft, mit der die Gewinde angezogen werden, gleich, so hat dies eine größere Spannkraft zur Folge. Außerdem ist eine verstärkte Axialsicherung geschaffen, da nun über den gleichbleibenden axialen Eingriffsbereich mehr Gewindegänge ineinandergreifen als zuvor.

Außerdem ist vorteilhaft, wenn das Mitnehmergewinde und / oder das Spindelgewinde in ihrer axialen Erstreckung verlängert ausgebildet sind. Die axialen beim Bohrvorgang auf ein Bohrfutter wirkenden Kräfte werden durch den Eingriffsbereich von dem Mitnehmergewinde in das Spindelgewinde kompensiert. Durch die verlängerte Bildung der beiden in Eingriff stehenden Gewinde werden die bei einem kurzen Bohrfutter stärker wirkenden Kräfte besser kompensiert. Sinnvollerweise wird deshalb mit Hilfe von Anschlägen ein Mindesteingriffsbereich von dem Mitnehmergewinde in das Spanngewinde festgelegt.

Von Vorteil ist außerdem, wenn der Spannkonus entlang der Führungsachsen und in Richtung der Öffnung der Werkzeugaufnahme verlaufend, mit sich verstärkender Konuswandung gebildet ist. Durch diese Form des Spannkonus ist gewährleistet, dass die bei einem kurzen Bohrfutter auf die Spannbacken und damit auf den Spannkonus verstärkt wirkende Radialbelastung sinnvoll kompensiert ist.

Vorteilhaft ist auch, wenn die Backenflächen parallel zur Futterachse angeordnet sind. So können einzuspannende Bohrwerkzeuge mit größtmöglichem Reibschluss in der Werkzeugaufnahme gesichert werden. Durch spezielle Ausführungsformen der Spannbacken, wie sie in der oben genannten Druckschrift offenbart sind, ergeben sich weitere Möglichkeiten eine durch Reibschluss und / oder Formschluss das Bohrwerkzeug sichernde Werkzeugaufnahme zu bilden.

Eine weitere vorteilhafte Ausführungsform ist dadurch gegeben, dass der Anschluss für eine Werkzeugmaschine zu einer Spindelaufnahme zur Aufnahme einer Werkzeugspindel gebildet ist. Somit kann das Gewicht des Bohrfutters reduziert werden, da weniger Material für die Herstellung eingesetzt werden muss.

Auch ist vorteilhaft, wenn der Anschluss für eine Werkzeugmaschine durch eine integral mit dem Futterkörper gebildete Werkzeugspindel gebildet ist. Dadurch kann der Futterkörper und die Werkzeugspindel in einem Bearbeitungsschritt hergestellt werden. Außerdem ist kein Stoß zwischen Futterkörper und Werkzeugspindel mehr vorhanden, was die Stabilität des Bohrfutters erhöht.

Im folgenden wird die Erfindung an in der Zeichnung dargestellten Ausführungsbeispielen näher erläutert; es zeigen:
- Fig. 1: ein kurzes nachspannendes Bohrfutter teils geschnitten, teils als Seitenansicht gezeigt,
- Fig. 2: eine weitere Ausführungsform des kurzen Bohrfutters als nachspannendes Bohrfutter,
- Fig. 3: eine Ausführungsform des Bohrfutters gemäß Fig. 2 mit einer konischen Spindelaufnahme,
- Fig. 4: eine Ausführungsform des Bohrfutters gemäß Fig. 2 mit einer Werkzeugspindel,
- Fig. 5: ein weiteres Ausführungsbeispiel des kurzen Bohrfutters,
- Fig. 6: eine Ausführungsform des Bohrfutters gemäß Fig. 5 mit einer konischen Spindelaufnahme, und
- Fig. 7: eine Ausführungsform des Bohrfutters gemäß Fig. 5 mit einer Werkzeugspindel.

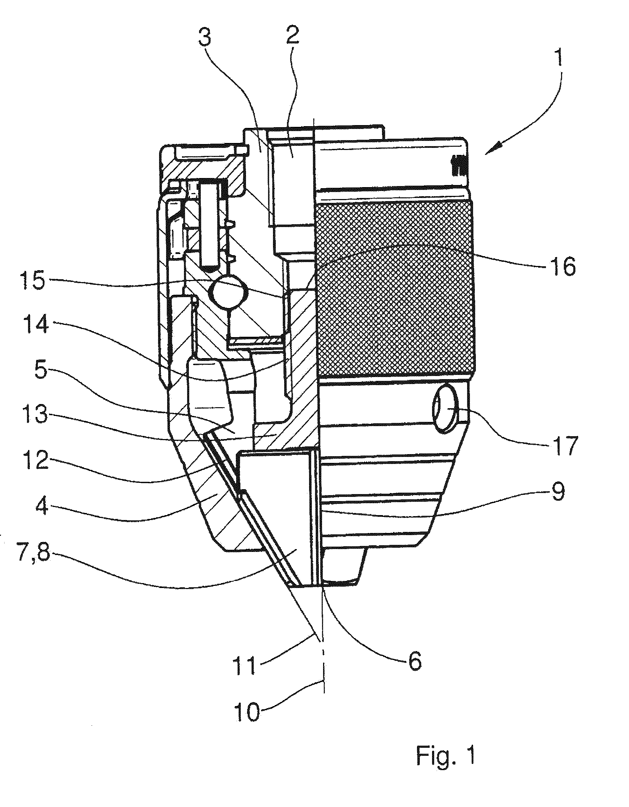

Fig. 1 zeigt ein bevorzugtes Ausführungsbeispiel des erfindungsgemäßen Bohrfutters 1.

Dieses besitzt einen Futterkörper 3, der einen zu einer Spindelaufnahme gebildeten Anschluss 2 für eine Werkzeugmaschine aufweist und einen zum Futterkörper 3 verdrehbaren Spannkonus 4, der axial auf einem am Futterkörper 3 gelagerten Backenhalter 5 abgestützt ist.

Die Spindelaufnahme weist ein Innengewinde auf, wodurch eine das Bohrfutter 1 auf eine Werkzeugspindel mit entsprechendem Außengewinde aufgeschraubt werden kann.

Weiterhin zeigt das Bohrfutter 1 eine Verriegelungseinrichtung, welche koaxial zur Futterachse 10 angeordnet ist. Sie besteht aus einer Sperrklinke, die mit zwei Hebeln gebildet ist, wovon ein Hebel dem Eingriff in einen koaxial zur Futterachse 10 angeordneten Zahnkranz dient und der andere Hebel von einer Druckfeder beaufschlagt wird, um die Verkippung der Sperrklinke um die Lagerachse zu bewirken. In einer bevorzugten Ausführungsform ist der Zahnkranz direkt am Futterkörper 3 ausgebildet. Die Verriegelungseinrichtung ist so gebildet, dass bei Eingriff der Sperrklinke in den Zahnkranz eine Sperrung bei Relativdrehung des Futterkörpers 3 bezüglich des Spannkonus 4 im Sinne eines Lösens der Spannbacken 7 auftritt. Relativdrehungen im Sinne eines Spannens werden von der Verriegelungseinrichtung unbehindert gelassen.

Im Spannkonus 4 sind gleichmäßig über den Umfang verteilt eine Mehrzahl von zwischen sich eine Werkzeugaufnahme 6 bildenden Spannbacken 7 angeordnet, die mit ihrem Backenkörper 8 auf der den Backenflächen 9 gegenüberliegenden Seite auf einer zur Futterachse 10 geneigten Führungsachse 11 in Führungsschlitzen 12 geführt sind.

Koaxial zu Futterachse 10 und zum Spannkonus 4 ist im Ausführungsbeispiel der Fig. 1 ein Lösering angeordnet, der drehmomentübertragend mit dem Spannkonus 4 betätigbar ist. Üblicherweise besitzt der Lösering an seinem Innenumfang eine Steuerkurve, die mit dem zweiten durch die Druckfeder beaufschlagten Hebel der Sperrklinke zusammenwirkt.

Zwischen dem Backenhalter 5 und dem Futterkörper 3 ist weiterhin eine Kugellagerung vorgesehen, wodurch der Backenhalter 5 und damit der Spannkonus 4 am Futterkörper 3 gehalten werden.

Die Spannbacken 7 sind radial verstellbar an einem Mitnehmer 13 geführt und zum Spannen und Lösen durch eine Relativdrehung zwischen dem Futterkörper 3 und dem Spannkonus 4 mit dem Backenhalter 5 verstellbar. Zur Verstellung greift der Mitnehmer 13 mit einem Mitnehmergewinde 14 in ein koaxial zur Futterachse 10 ausgebildetes Spindelgewinde 15 ein.

Der Schnittpunkt der Führungsachsen 11 ist gegenüber einem Standardbohrfutter in Richtung der Werkzeugaufnahme 6 versetzt. Wobei in dem gezeigten Ausführungsbeispiel die Neigung der Führungsachsen 11 bezüglich der Futterachse 10 30 Grad beträgt.

Der gezeigte Spannkonus 4 ist entlang der Führungsachsen 11 und in Richtung der Öffnung der Werkzeugaufnahme 6 verlaufend, mit sich verstärkender Konuswandung gebildet.

In dieser Ausführungsform sind die Führungsschlitze 12, das Mitnehmergewinde 14 und das Spindelgewinde 15 so lang wie möglich gebildet, um zu gewährleisten, dass die bei einem kurzen Bohrfutter 1 verstärkt wirkenden Axialkräfte sinnvoll kompensiert werden. Weiterhin ist in dem Spannkonus 4 eine Bohrung 17 ausgebildet, welche bei Bohr- oder Schraubvorgängen über Kopf, den Staub, der in das Bohrfutter 1 gelangt, herausschleudert.

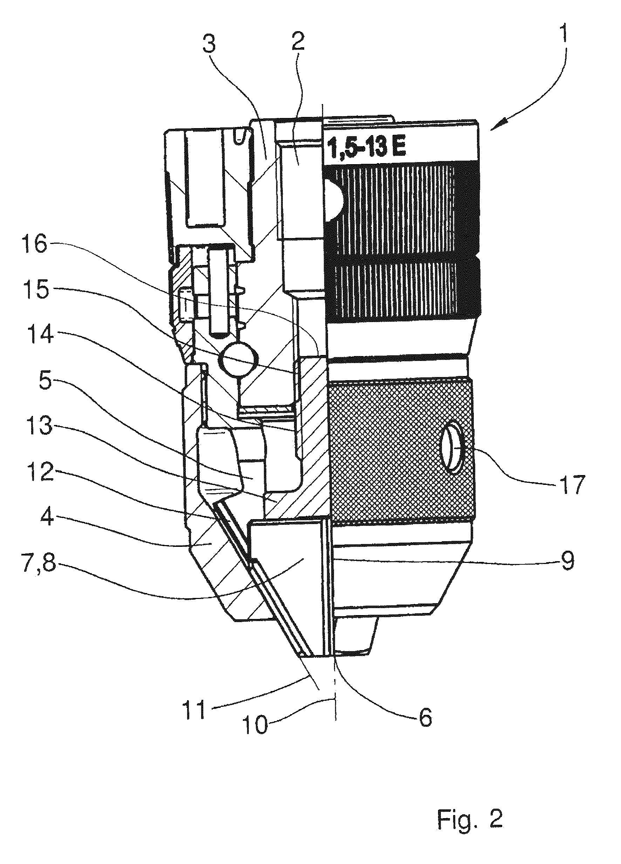

Fig. 2 zeigt eine weitere Ausführungsform des Bohrfutters 1 aus Fig. 1, wobei der hier gezeigte Lösering getrennt von dem Spannkonus 4 betätigbar ist. So kann zunächst die Sperrklinke mittels der am Innenumfang des Löserings angeordneten Steuerkurve aus dem Eingriff des Zahnkranzes gebracht werden, wodurch die Lösung des Bohrfutter 1 ermöglicht ist. Nun kann der Spannkonus betätigt werden, um die Werkzeugaufnahme 6 zu öffnen.

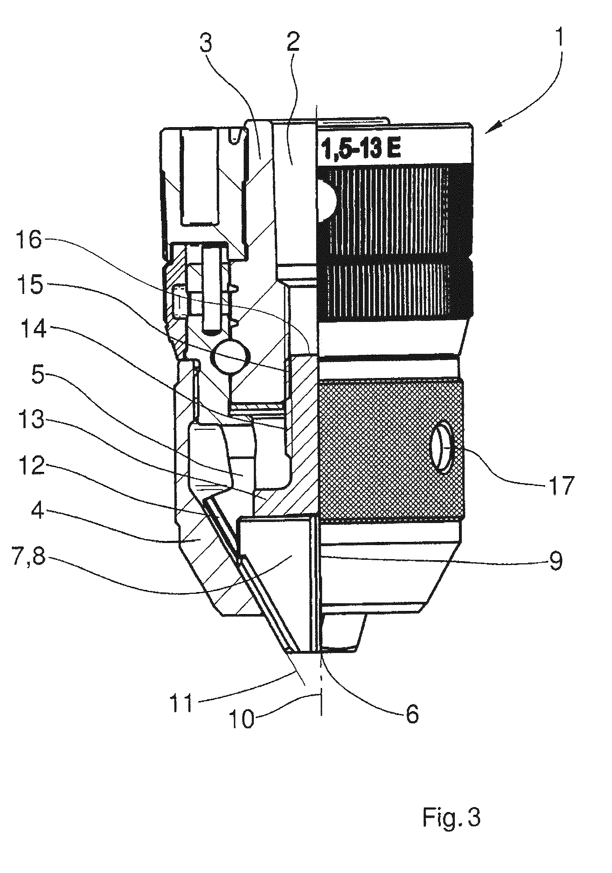

Eine weitere Ausführungsform des Spannfutters aus Fig. 2 ist in Fig. 3 gezeigt, wobei hier die Spindelaufnahme nicht mit einem Innengewinde gebildet ist. Die Spindelaufnahme verläuft konisch, verjüngend in Richtung der Werkzeugaufnahme 6, was einen Reibschluss zwischen Spindelaufnahme und angeschlossener Werkzeugspindel ermöglicht.

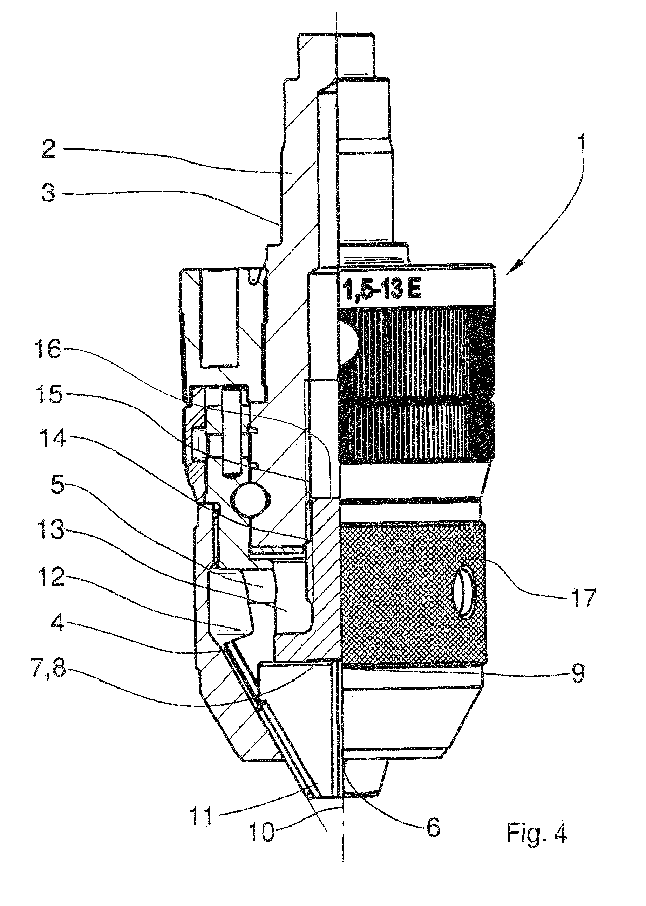

In Fig.4 ist ein weiteres Ausführungsbeispiel des Bohrfutters aus Fig. 2 gezeigt bei dem der Anschluss 2 für eine Werkzeugmaschine durch eine integral mit dem Futterkörper gebildete Werkzeugspindel gebildet ist.

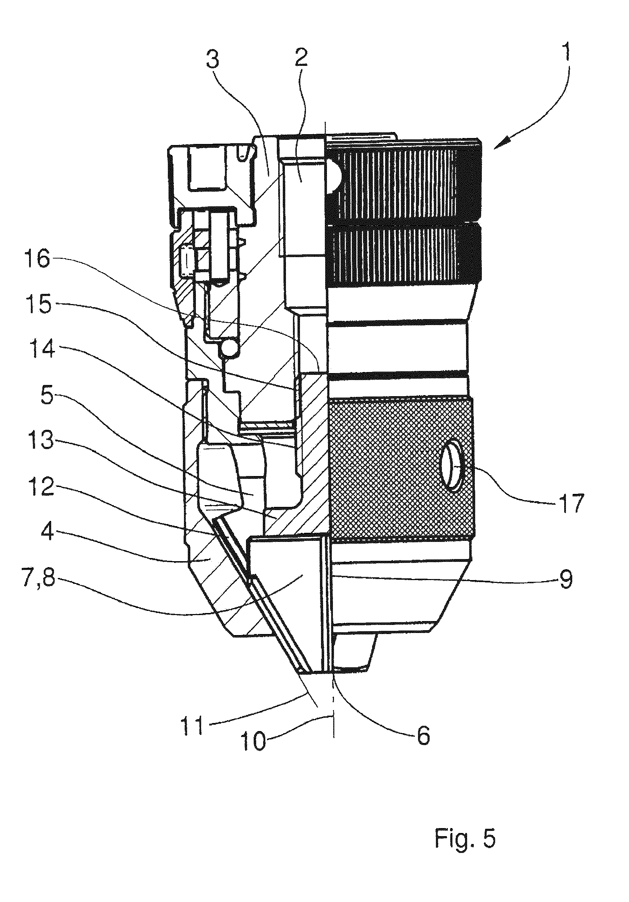

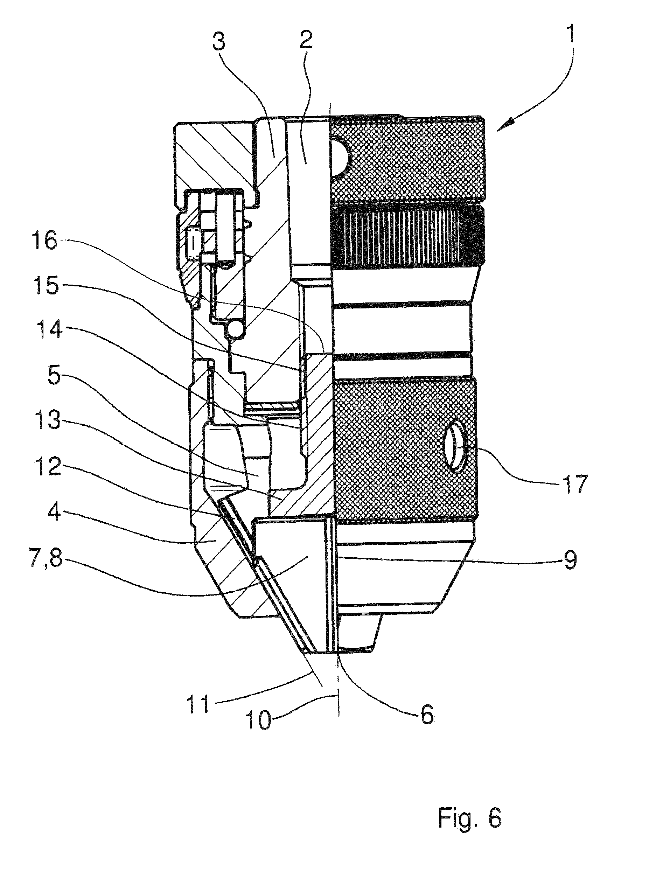

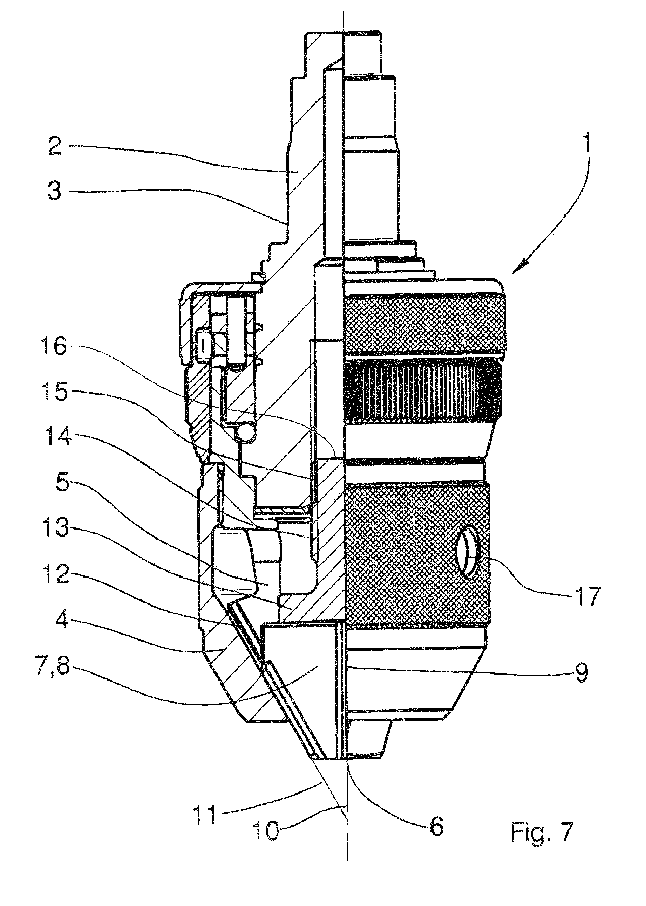

Fig. 5 bis Fig. 7 zeigen ein weiteres Ausführungsbeispiel des erfindungsgemäßen Bohrfutters 1, wobei die Kugellagerung nun nicht mehr nur zwischen dem Backenhalter 5 und dem Futterkörper 3 angeordnet ist, sondern ein zusätzlicher Druckring das axial rückwärtige Ende der Kugellagerung abschließt. Somit sind die Kugeln in einem Gehäuse gelagert, das durch den Futterkörper 3, den Backenhalter 5 und den Druckring gebildet wird. In der Ausführungsform des Bohrfutters 1 nach Fig. 5 ist die Spindelaufnahme ebenfalls mit einem Innengewinde gebildet. Fig. 7 zeigt das entsprechende Ausführungsbeispiel des Bohrfutters 1 nach Fig. 5 mit einer integral mit dem Futterkörper gebildeten Werkzeugspindel.

### Bezugszeichenliste

- **1**: **Bohrfutter**
- **2**: **Anschluss für eine Werkzeugmaschine**
- **3**: **Futterkörper**
- **4**: **Spannkonus**
- **5**: **Backenhalter**
- **6**: **Werkzeugaufnahme**
- **7**: **Spannbacken**
- **8**: **Backenkörper**
- **9**: **Backenflächen**
- **10**: **Futterachse**
- **11**: **Führungsachse**
- **12**: **Führungsschlitz**
- **13**: **Mitnehmer**
- **14**: **Mitnehmergewinde**
- **15**: **Spindelgewinde**
- **16**: **Mitnehmeraufnahme**
- **17**: **Bohrung**

## Patentansprüche

1. Bohrfutter (1) mit einem ein Anschluss (2) für eine Werkzeugmaschine aufweisenden Futterkörper (3) und mit einem zum Futterkörper (3) verdrehbaren Spannkonus, der axial auf einem am Futterkörper (3) gelagerten Backenhalter (5) abgestützt ist, in dem gleichmäßig über den Umfang verteilt eine Mehrzahl von zwischen sich eine Werkzeugaufnahme (6) bildenden Spannbacken (7) angeordnet sind, die mit ihrem Backenkörper (8) auf der den Backenflächen (9) gegenüberliegenden Seite auf einer zur Futterachse (10) geneigten Führungsachse (11) in Führungsschlitzen (12) und radial verstellbar an einem Mitnehmer (13) geführt sind und zum Spannen und Lösen durch eine Relativdrehung zwischen dem Futterkörper (3) und dem Spannkonus (4) mit dem Backenhalter (5) verstellbar sind, wozu der Mitnehmer (13) mit einem Mitnehmergewinde (14) in ein koaxial zur Futterachse (10) ausgebildetes Spindelgewinde (15) einer Mitnehmeraufnahme (16) des Futterkörpers (3) eingreift, **dadurch gekennzeichnet, dass** der Schnittpunkt der Führungsachsen (11) gegenüber einem Standardbohrfutter in Richtung der Werkzeugaufnahme (6) versetzt ist.

2. Bohrfutter (1) nach Anspruch 1, **dadurch gekennzeichnet, dass** die Neigung der Führungsachsen (11) bezüglich der Futterachse (10) zwischen 20 und 50 Grad beträgt.

3. Bohrfutter (1) nach Anspruch 2, **dadurch gekennzeichnet, dass** die Neigung der Führungsachsen (11) bezüglich der Futterachse (10) zwischen 25 und 35 Grad beträgt.

4. Spannfutter nach einem der Ansprüche 1 bis 3, **dadurch gekennzeichnet, dass** das Mitnehmergewinde (14) und das Spindelgewinde (15) gegenüber einem Standardbohrfutter mit verringerter Gewindesteigung gebildet sind.

5. Bohrfutter (1) nach einem der Ansprüche 1 bis 4, **dadurch gekennzeichnet, dass** das Mitnehmergewinde (14) und / oder das Spindelgewinde (15) in ihrer axialen Erstreckung verlängert ausgebildet sind.

6. Bohrfutter (1) nach einem der Ansprüche 1 bis 5, **dadurch gekennzeichnet, dass** der Spannkonus (4) entlang der Führungsachsen (11) und in Richtung der Öffnung der Werkzeugaufnahme (6) verlaufend, mit sich verstärkender Konuswandung gebildet ist.

7. Bohrfutter (1) nach einem der Ansprüche 1 bis 6, **dadurch gekennzeichnet, dass** die Backenflächen (9) parallel zur Futterachse (10) angeordnet sind.

8. Bohrfutter (1) nach einem der Ansprüche 1 bis 7, **dadurch gekennzeichnet, dass** der Anschluss (2) für eine Werkzeugmaschine durch eine Spindelaufnahme zur Aufnahme einer Werkzeugspindel gebildet ist.

9. Bohrfutter (1) nach einem der Ansprüche 1 bis 7, **dadurch gekennzeichnet, dass** der Anschluss (2) für eine Werkzeugmaschine durch eine integral mit dem Futterkörper gebildete Werkzeugspindel gebildet ist.
